# EUROPÄISCHE PATENTSCHRIFT

(11) **EP 1 931 904 B1**
(45) Veröffentlichungstag und Bekanntmachung des Hinweises auf die Patenterteilung: **31.03.2010**
(21) Anmeldenummer: 06775198.2
(22) Anmeldetag: 18.09.2006
(51) Int. Cl.: F16L 25/00

(54) **VERBINDUNGS- UND ANSCHLUSSSTÜCK FÜR WELLROHRE**
CONNECTION AND JOINT PIECE FOR WELL TUBES
PIECE DE LIAISON ET DE RACCORDEMENT DESTINEE A DES TUBES ONDULES

(30) Priorität: 03.10.2005 CH 15922005
(43) Veröffentlichungstag der Anmeldung: 18.06.2008
(73) Patentinhaber: PMA AG, 8610 Uster (CH)
(72) Erfinder: SCHWARZ, Ernst, CH-8322 Gündisau (CH); FAULAND, Sabine, CH-8032 Zürich (CH)
(74) Vertreter: Frei Patent Attorneys
(86) Internationale Anmeldenummer: PCT/CH2006/000505
(87) Internationale Veröffentlichungsnummer: WO 2007/038885

(56) Entgegenhaltungen:
- EP-A2- 1 465 309
- DE-A1- 2 132 181
- DE-A1- 10 253 090
- US-A1- 2001 008 342

## Beschreibung

Verbindungs- und Anschlussstück für Wellrohre mit einem Gehäuse, welches einen Kernhohlraum sowie eine Einstecköffnung zur Aufnahme eines Endes eines Wellrohres aufweist, einem Verbindungsflansch und einem Verbindungsstück mit einer Durchlassöffnung sowie einer in der Einbauposition des Wellrohres zwischen dem Aussenmantel des Endes des Wellrohres und dem Innenmantel des Kernhohlraumes des Gehäuses angeordneten Hülse mit elastischen Mantelsegmenten und nach innen und nach aussen gerichteten Sperrnocken.

Wellrohre, bzw. Wellschläuche sind flexible Elemente, welche zum Beispiel bei der Verlegung und zum Schutz von elektrischen und optischen Leitern in der Bauindustrie oder beim Anschluss von Maschinen oder anderen Geräten Verwendung finden. Ein besonders häufiges Anwendungsgebiet ist die Verwendung als flexibles Schutz- und Führungsrohr in der Fahrzeugindustrie. Die Wellrohre bestehen in den meisten Fällen aus Kunststoff, können jedoch auch aus Metall hergestellt sein. Für die Verbindung von Wellrohren miteinander und deren Anschluss an Geräte, Maschinen oder Einrichtungen sind Verbindungs- und Anschlussstücke notwendig, welche beispielsweise auch als Armaturen oder Einschraubstutzen bezeichnet werden.

Verbindungs- und Anschlussstücke, bzw. Anschlussarmaturen dieser Art sind in verschiedenen Ausführungsformen bekannt. Die Patentschrift EP 465 896 beschreibt beispielsweise eine Anschlussarmatur für einen flexiblen Wellschlauch. Diese Anschlussarmatur verfügt über ein Gehäuse mit einem Kernhohlraum, wobei ein Ende des Wellschlauches, bzw. Wellrohres in diesen Kernhohlraum eingeschoben ist. An dem vom Kernhohlraum abgewendeten Ende des Gehäuses ist ein Verbindungsstück in der Form eines Schraubstutzens angeordnet und am hinteren Ende dieses Schraubstutzens weist das Gehäuse einen Verbindungsflansch auf. Dieser Schraubstutzen dient dazu, um die Armaturen durch Einschrauben in eine Gewindebohrung an einer Wandung eines Gehäuses mit diesem Gehäuse zu verbinden, oder der Schraubstutzen wird durch eine Bohrung durchgesteckt und an der Innenseite mit einer Mutter festgespannt. Das Gehäuse der Armatur wird durch Spritzgiessen aus einem Kunststoff, zumeist einem Thermoplast hergestellt. Zwischen dem Aussenmantel des Endes des Wellrohres und dem Innenmantel des Kernhohlraumes des Gehäuses ist eine Hülse angeordnet, welche mehrere elastische, federnde Mantelsegmente aufweist. Die federnden Mantelsegmente weisen nach innen und nach aussen gerichtete Sperrnocken auf, wobei die nach aussen gerichteten Sperrnocken in Durchbrüche am Mantel des Gehäuses der Armatur eingreifen. Die nach innen gerichteten Sperrnocken greifen in ein Wellental am Ende des Wellrohres ein und halten dieses im Anschlussstück fest. Zwischen dem inneren Ende dieser Hülse und dem inneren Ende des Kernhohlraumes des Gehäuses ist eine manschettenförmige Dichtung eingelegt. Diese Dichtung soll das Eindringen von Schmutz und Feuchtigkeit durch den Zwischenraum zwischen dem Wellrohr und dem Anschlussstück verhindern. Beim Zusammenbau dieser Anordnung muss zuerst die Dichtung in den Kernhohlraum des Anschlussstückes eingelegt werden. Dann wird die Hülse in den Kernhohlraum eingeschoben und die äusseren Sperrnocken an den federnden Mantelsegmenten rasten in die Aussparungen am Gehäuse ein. Jetzt kann das Ende des Wellrohres in das Anschlussstück eingesteckt und die Verbindung zwischen diesen beiden Bauelementen hergestellt werden. Beim Zusammenstecken der beiden Bauelemente besteht die Gefahr, dass die Dichtung durch das Einschieben des Rohres deformiert oder beschädigt und dadurch die Dichtwirkung vermindert oder aufgehoben wird. Auch wenn das Ende des Wellrohres nicht vollständig in das Anschlussstück eingeschoben ist, wird es trotzdem durch die Sperrnocken festgehalten. In einer solchen Position ist jedoch keine sichere Verbindung gewährleistet und auch die Wirkung der Dichtung entfällt. Beim Abbiegen, bzw. Abknicken des Wellrohres gegenüber dem Anschlussstück kann die Hülse einseitig im Anschlussstück verkantet werden, was zu einer zusätzlichen Reduktion der Dichtigkeit, aber unter Umständen auch zu einem Lösen oder Ausreissen der Verbindung führt. Diese Mängel sind insbesondere bei Verbindungen, welche Spritzwasser ausgesetzt sind, sehr nachteilig und können zu Störungen und Beschädigungen führen. Insbesondere bei Anwendungen im Fahrzeugbau oder an Werkzeugmaschinen ist es sehr wichtig, dass kein Schmutz und kein Spritzwasser in das Innere der Verbindung eindringen können.

Aus EP 1 465 309 A2 ist eine Verbindungsarmatur für Schutzrohre für elektrische Leitungen bekannt, wobei das Gehäuse dieser Armatur aus unterschiedlichen Kunststoffmaterialien gebildet ist. Diese Verbindungsarmatur besteht nur aus einem rohrförmigen Gehäuse aus relativ hartem Kunststoff und Teilbereichen aus weichem Kunststoff, welche gegen den inneren Hohlraum des rohrförmigen Gehäuses gerichtet sind. Diese nach innen gerichteten Teilbereiche des Gehäuses dienen dazu, ein in das Gehäuse eingeschobenes Rohrende durch die Elastizität des Materials einzuklemmen und gleichzeitig eine Dichtung zu bilden. Rohrende und Verbindungsarmatur können bereits durch geringe Zugkräfte, welche in Längsrichtung wirken, wieder voneinander getrennt werden. Wird das mit der Verbindungsarmatur verbundene Rohrende im Bereiche der Armaturen gebogen, so wird das Rohrende aus der Armatur gezogen und die Verwendung wird defekt. Dieses Verbindungssystem kann deshalb für Wellrohre, welche unter Zugbelastung stehen, zum Beispiel bei Verwendung im Fahrzeugbau oder bei Werkzeugmaschinen mit beweglichen Teilen, nicht eingesetzt werden. Es ist auch nicht erkennbar, ob das Rohrende vollständig oder nur teilweise in die Verbindungsarmatur eingesteckt ist. Beim Einstecken eines Rohrendes in die Verbindungsarmatur können die Teilbereiche des Gehäuses mit dem dichtenden Material auch beschädigt werden, so dass die Dichtwirkung entfällt.

DE 21 32 181 A1 beschreibt eine Lösung zum Verbinden von starren Rohren, insbesondere bei Staubsaugern. Dabei ist eine Hülse aus elastischem Material, wie Kunststoff, fest auf ein Rohrende aufgezogen. Diese Ausgestaltung einer Verbindung ist jedoch bei Wellrohren nicht anwendbar. Zudem ist das Zusammenstecken von zwei Rohren nur in einer genau vorbestimmten Umfangsposition möglich. Das Verbindungsteil zur Aufnahme des Rohrendes muss Durchbrüche durch den Aussenmantel aufweisen, was zu einer erheblichen Reduktion der Dichtwirkung führt.

Es ist deshalb Aufgabe der vorliegenden Erfindung, ein Verbindungs- und Anschlussstück für Wellrohre zu schaffen, bei welchem das vollständige Einstecken des Rohres notwendig ist, um die Verbindung herzustellen und eine Kontrolle des vollständigen Einsteckens möglich ist, eine sichere und dauerhafte Abdichtung zwischen allen Teilen der Verbindung gewährleistet ist, das Verkanten der Kernhülse im Gehäuse verhindert wird, das Einrasten der Kernhülse in die Sperrposition im Gehäuse in beliebiger Umfangsposition erfolgen kann, sowie eine grosse Sicherheit gegen das Ausreissen des Wellrohres besteht und bei welchem die Aussenfläche der Bauteile der Verbindung möglichst keine Angriffspunkte für das Eindringen von Schmutz und Spritzwasser anbietet.

Diese Aufgabe wird durch die im kennzeichnenden Teil des Patentanspruches 1 definierten Merkmale gelöst. Vorteilhafte Weiterbildungen der Erfindung ergeben sich nach den Merkmalen der abhängigen Patentansprüche.

Das erfindungsgemässe Verbindungs- und Anschlussstück weist eine Hülse auf, welche ein mehrteiliges Kunststoff-Spritzgussteil ist, wobei die verschiedenen Teile fest miteinander verbunden sind. Ein erstes zylinderförmiges Teil dieser Hülse bildet eine Kernhülse, ein zweites zylinderförmiges Teil bedeckt mindestens einen Teilbereich des Aussenmantels dieser Kernhülse und ein drittes zylinderförmiges Teil bedeckt mindestens einen Teilbereich des Innenmantels dieser Kernhülse. In vorteilhafter Weise ist die Hülse und deren Einzelteile als Mehrkomponenten-Spritzgussteil ausgebildet und auch durch Mehrkomponenten-Spritzgiessen zusammengefügt. Diese Ausgestaltung der Hülse ermöglicht es, für die verschiedenen Einzelteile der Hülse unterschiedliche Materialien einzusetzen und dadurch die Aufgabe der hohen Auszugsfestigkeit und der sicheren Dichtigkeit mittels eines einzigen Bauteiles zu lösen. Dies ermöglicht im Weiteren die optimale Formgestaltung der Einzelteile der Hülse. Der Erfindungsgegenstand sieht vor, dass das zweite Teil der Hülse am Aussenmantel eine Dichtung bildet, und vorzugsweise mehrere radial nach aussen gerichtete, umlaufende und voneinander beabsta dete Dichtungslippen bildet. Das dritte Teil der Hülse weist am Innenmante eine Dichtung, und zwar vorzugsweise weist radial nach innen gerichtete, umlaufende und voneinander beabstandete Dichtungslippen auf. Durch diese Anordnung wird zwischen dem Innenmantel des Kernhohlraumes am Gehäuse und dem Aussenmantel der Hülse sowie zwischen dem Innenmantel der Hülse und dem Aussenmantel des Wellrohres je eine Labyrinthdichtung gebildet. Diese Labyrinthdichtungen erstrecken sich über einen relativ langen Bereich der Kontaktflächen zwischen den Bauelementen und bilden dadurch eine sehr gute Dichtungswirkung gegen das Eindringen von Schmutz und Spritzwasser.

Erfindungsgemäss wird weiter vorgeschlagen, dass der Mantel des Gehäuses geschlossen ist und keine radialen Durchbrüche aufweist Im Weiteren weist das Gehäuse am Ende mit der Einstecköffnung, am Mantel des Kernhohlraumes eine Ringnute auf und zwischen dieser Ringnute und der Einstecköffnung ist eine nach innen gerichtete ringförmige Rippe ausgebildet. Diese Ausgestaltung des Gehäuses wirkt mit entsprechend ausgestalteten Sperrteilen an der Hülse zusammen, wobei diese Formgebungen das Anbringen von Durchbrüchen am Mantel des Gehäuses unnötig machen. Dadurch wird eine erhebliche Schwachstelle der bekannten Anschlussstücke vermieden und die Dichtigkeit zusätzlich erheblich verbessert.

Der Erfindungsgegenstand sieht auch vor, dass am äusseren Endbereich der Kernhülse, welcher in der Einbauposition der Hülse im Gehäuse gegen die Einstecköffnung am Gehäuse gerichtet ist, mehrere Längsschlitze angeordnet sind und der Mantel der Kernhülse durch die Längsschlitze in diesem Endbereich in mehrere, in radialer Richtung elastisch bewegliche elastische Mantelsegmente ausbildende Zungen aufgeteilt ist. Diese Längsschlitze erstrecken sich nicht über die ganze Länge der Kernhülse sondern vorzugsweise nur über einen Teilbereich, vom Endbereich mit der Einstecköffnung gegen den Mittelbereich. An mindestens einer dieser Zungen der Kernhülse ist mindestens ein nach aussen gerichteter Sperrnocken angeordnet. Gleichzeitig ist erfindungsgemäss am äusseren Endbereich der Kernhülse eine nach innen gerichtete Rippe ausgebildet, welche vorzugsweise eine oder mehrere Krallen bildet. Diese Krallen greifen in der Einbauposition des Wellrohres in ein Wellental am Aussenmantel des Wellrohres ein und halten dieses fest. In weiterer bervorzugter Ausgestaltung weist die Kernhülse an einem inneren Endbereich eine nach innen gerichtete Schulter als Anschlag für das Ende des Wellrohres auf. Durch diese Ausgestaltung kann die Hülse auf das Ende eines Wellrohres aufgeschoben werden, wobei die elastisch beweglichen Zungen in radialer Richtung nach aussen ausgelenkt und die nach innen gerichteten Krallen über die Wellen am Aussenmantel des Wellrohres geschoben werden können. Dadurch kann die Hülse vollständig auf das Ende des Wellrohres aufgeschoben werden bis das Wellrohrende an der Anschlagschulter am inneren Endbereich der Hülse ansteht.

In vorteilhafter Weise ist die nach innen gerichtete Ringfläche der ringförmigen Rippe am Gehäuse als Konusfläche ausgebildet. Dabei divergiert diese Konusfläche in Richtung der Einstecköffnung. Beim Verbinden des Endes des Wellrohres mit dem Anschlussstück wird zuerst die Hülse auf das Ende des Wellrohres aufgeschoben und dann das Wellrohrende mit der aufgeschobenen Hülse in den Kernhohlraum des Gehäuses eingesteckt. Dabei wird einer oder mehrere der nach aussen gerichteten Sperrnocken an den beweglichen Zungen der Hülse, an der Konusfläche der ringförmigen Rippe am Gehäuse nach innen ausgelenkt und schnappt hinter dieser Rippe in die Ringnute am Mantel des Kernhohlraumes ein. Das Auslenken der Sperrnocken nach innen wird dabei durch elastische Deformation einerseits des Wellrohres und anderseits der ringförmigen Rippe, bzw. des Gehäuses in diesem Bereich, ermöglicht. Nach dem Einrasten des nach aussen gerichteten Sperrnockens in die Ringnute am Gehäuse greifen die Krallen an der nach innen gerichteten Rippe an der Kernhülse in ein Wellental am Wellrohr ein und werden durch die ringförmige Rippe am Gehäuse in dieser Position festgestellt. Dies wird dadurch sichergestellt, dass der Innendurchmesser der ringförmigen Rippe am Gehäuse nur geringfügig grösser ist als der Aussendurchmesser der Kernhülse im Bereiche zwischen der Anschlagfläche des nach aussen gerichteten Sperrnockens und der äusseren Stirnfläche der Hülse.

Eine weitere Ausbildung der Erfindung sieht vor, am äusseren Ende der Kernhülse einen nach aussen gerichteten Ringkragen anzuordnen, welcher mit einer in Achsrichtung offenen Ringnute an der Einstecköffnung des Gehäuses zusammenwirkt. In der eingerasteten Einbauposition der Hülse im Gehäuse wirkt dieser Ringkragen gemeinsam mit der Ringnute ebenfalls als Labyrinthdichtung und verhindert das Eindringen von Schmutz und Spritzwasser. Am Ringkragen an der Kernhülse ist eine Aussparung angeordnet und eine oder mehrere nach aussen gerichtete Sperrnocken sind im Bereiche dieser Aussparung an mindestens einer der elastisch beweglichen Zungen der Kernhülse ausgebildet. Wenn die Verbindung zwischen dem Wellrohr und dem Anschlussstück gelöst werden soll, kann ein Hilfswerkzeug, z.B. das vordere Ende eines Schraubenziehers, in diese Aussparung eingesteckt und durch Verkanten und elastisches Deformieren die Sperrwirkung des nach aussen gerichteten Sperrnockens aufgehoben werden.
Das Wellrohr kann dann aus dem Anschlussstück herausgezogen werden. Die Verbindung ist somit lösbar und kann mehrmals geschlossen und wieder geöffnet werden.

Es ist auch vorteilhaft, am mittleren Bereich des Aussenmantels der Kernhülse mindestens eine zusätzliche Aussenrippe anzuordnen, welche in der Einbauposition der Kernhülse im Gehäuse am Innenmantel des Kernhohlraumes des Gehäuses anliegt und die Kernhülse zentriert. Diese zusätzliche Aussenrippe an der Kernhülse verhindert das Verkanten der Hülse im Kernhohlraum des Gehäuses, wenn das Wellrohr gebogen oder abgeknickt wird. Sie verbessert dadurch die Sicherheit der Verbindung und schützt die Verbindungsteile vor Beschädigungen. Die Aussenrippe kann Unterbrüche aufweisen, so dass Nocken gebildet werden.

Eine weitere Ausgestaltung der Erfindung sieht vor, dass das Gehäuse und das erste Teil der Hülse, welches die Kernhülse bildet, aus einem harten thermoplastischen Kunststoff gebildet sind und dieser Kunststoff ein Kunststoff aus der Gruppe der Polyamide (PA) oder der Polypropylene (PP) ist. Das zweite und das dritte Teil der Hülse ist in vorteilhafter Weise aus einem thermoplastischen elastomeren Kunststoff gebildet und dies ist ein Kunststoff aus der Gruppe der Polyurethan Elastomere (TPE-U) oder der Olefin Elastomere (TPE-O) oder der Amid Elastomere (TPE-A) oder ein vernetztes thermoplastisches Elastomer (TPE-X). Am Gehäuse und an der Kernhülse sind die Sperr- und Halteelemente ausgebildet, welche die Kräfte aufnehmen und übertragen müssen und die sichere Verbindung zwischen Wellrohr und Anschlussstück gewährleisten. Der harte thermoplastische Kunststoff kann diese Aufgabe erfüllen, da die vorgeschlagenen Kunststoffe die notwendige Festigkeit aufweisen. Die thermoplastischen elastomeren Kunststoffe, welche für das zweite und das dritte Teil der Hülse vorgeschlagen werden, weisen eine optimale Elastizität für den Einsatz als Dichtungselemente auf. Beide Materialgruppen sind sehr gut für das Spritzgiessen im Mehrkomponenten-Verfahren geeignet und bilden gemeinsam eine optimale Kombination für diese Anwendung.

Der feste Zusammenhalt der einzelnen Teile der Hülse, nämlich der Kernhülse und des zweiten sowie des dritten zylinderförmigen Teiles, wird durch die Art der Verbindung bewirkt. Die Teile können so ausgestaltet sein, dass sie beim Spritzgiessen formschlüssig und kraftschlüssig miteinander verbunden werden. Es ist aber auch möglich, die drei Einzelteile der Hülse an den gegenseitigen Kontaktflächen stoffschlüssig miteinander zu verbinden. Dabei wird an den Kontaktflächen eine stoffliche Vereinigung oder Vernetzung der Teile bewirkt. Es kann aber auch vorteilhaft sein, die drei Einzelteile der Hülse an den gegenseitigen Kontaktflächen durch eine Kombination von Formschluss, Kraftschluss und Stoffschluss miteinander zu verbinden. Diese verschiedenen Möglichkeiten zur Verbindung der Teile geben dem Konstrukteur einen grossen Gestaltungsspielraum und ermöglichen eine einfache Anpassung an verschiedene Anforderungen der Verbindung zwischen Wellrohr und Anschlussstück. Die Hülse kann optimal für die Übernahme ihrer Aufgaben gestaltet werden, nämlich Gewährleistung der Dichtigkeit gegen Schmutz und Spritzwasser sowie sichere Übertragung und Aufnahme der auf das Wellrohr und das Anschlussstück wirkenden Kräfte.

In vorteilhafter Weise greift das dritte Teil der Hülse einstückig in die Längsschlitze, welche an der Kernhülse ausgebildet sind, ein und füllt diese Längsschlitze mindestens teilweise aus. Da das dritte Teil der Hülse aus elastischem relativ weichem Kunststoff besteht, können die Zungen der Kernhülse trotzdem in radialer Richtung nach innen oder aussen ausgelenkt werden. Das Material des dritten Teiles der Hülse, welches in diese Längsschlitze eingespritzt ist, hat auch die Funktion einer Abdichtung dieser Längsschlitze.

Im Folgenden wird die Erfindung anhand von Ausführungsbeispielen unter Bezugnahme auf die beiliegenden Zeichnungen näher erläutert. Es zeigen:
- Fig. 1: ein erfindungsgemässes Verbindungs- und Anschlussstück mit einem eingesteckten Rohrende in einem Teilschnitt,
- Fig. 2: einen Längsschnitt durch eine erfindungsgemässe Hülse,
- Fig. 3: eine perspektivische Ansicht einer erfindungsgemässen Hülse, und
- Fig. 4: ein Verbindungs- und Anschlussstück und ein Rohrende mit aufgesteckter Hülse vor dem Zusammenbau.

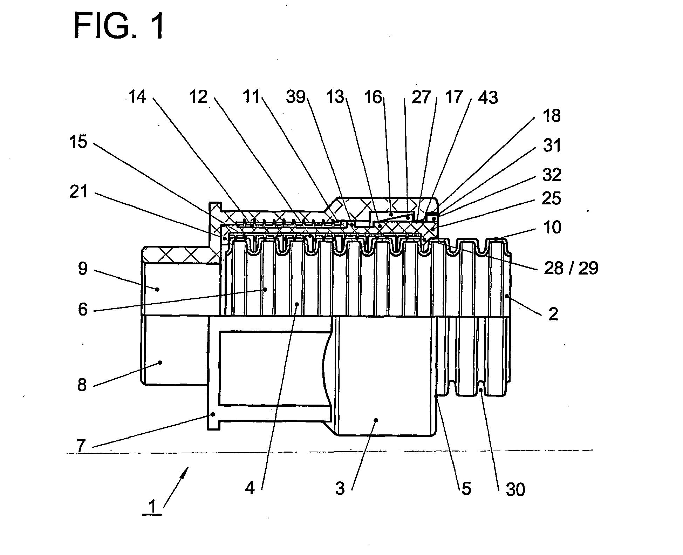

Fig. 1 zeigt ein Anschlussstück 1 mit einem eingesteckten Ende 6 eines Wellrohres 2. Der obere Teil ist dabei als Schnittfläche dargestellt. Das Anschlussstück 1 umfasst ein Gehäuse 3 mit einem Kernhohlraum 4. An einem Ende weist das Gehäuse 3 eine Einstecköffnung 5 auf, gegen welche auch der Kernhohlraum 4 offen ist. Am gegenüberliegenden Ende des Gehäuses 3 ist ein Verbindungsstück 8 mit einer Durchlassöffnung 9 und einem Verbindungsflansch 7 ausgebildet. Im dargestellten Beispiel ist das Verbindungsstück 8 als Schraubstutzen ausgeführt. Es kann aber auch eine andere, bei derartigen Anschlussstücken bekannte Form aufweisen, beispielsweise kann es auch ein Kupplungselement für die Verbindung mit einem zweiten Wellrohr sein. Im Kernhohlraum 4 des Gehäuses 3 befindet sich eine Hülse 12, welche das Ende 6 des Wellrohres 2 umschliesst. Das Gehäuse 3 weist einen vollständig geschlossenen Mantel ohne radiale Durchbrüche auf. Sowohl das Gehäuse 3, wie auch die Hülse 12 sind im dargestellten Beispiel Spritzgussteile aus Kunststoff. Das Gehäuse 3 ist aus einem harten thermoplastischen Kunststoff gebildet und besteht im vorliegenden Beispiel aus Polyamid (PA). Die Hülse 12 besteht aus mehreren Kunststoffteilen, welche durch Mehrkomponenten-Spritzguss geformt und miteinander verbunden sind.

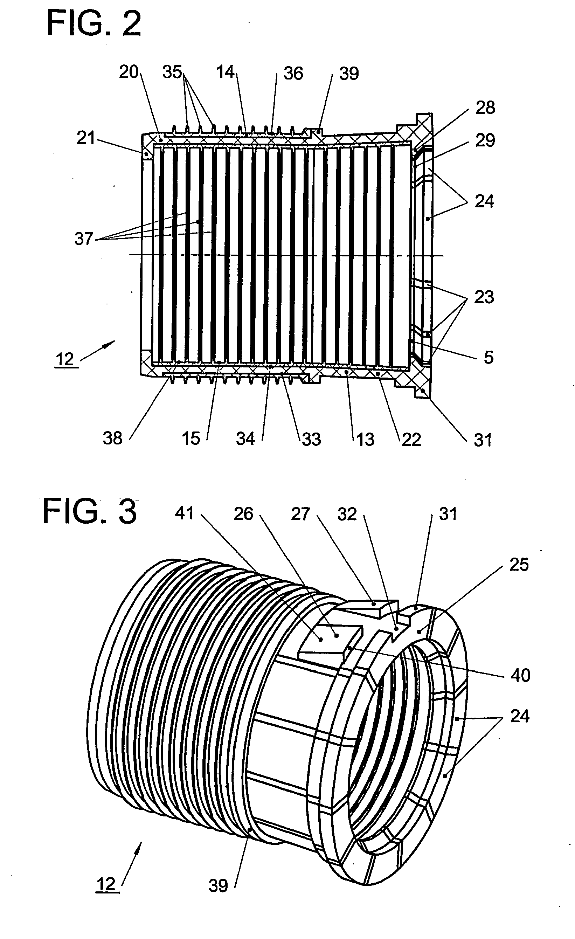

Der Aufbau und die Ausgestaltung der Hülse 12 sind in den Figuren 2 und 3 dargestellt. Fig. 2 zeigt einen Längsschnitt durch die erfindungsgemässe Hülse 12 und Fig. 3 eine perspektivische Ansicht dieser Hülse 12. Die Hülse 12 umfasst ein erstes zylinderförmiges Teil, welches eine Kernhülse 13 bildet und ein zweites zylinderförmiges Teil 14, welches mindestens einen Teilbereich des Aussenmantels 33 dieser Kernhülse 13 bedeckt sowie ein drittes zylinderförmiges Teil 15, welches mindestens einen Teilbereich des Innenmantels 34 dieser Kernhülse 13 bedeckt. Die Kernhülse 13 besteht im dargestellten Beispiel aus dem gleichen harten Kunststoffmaterial wie das Gehäuse 3, nämlich aus Polyamid (PA). Das erste Teil 13 und das zweite Teil 14 der Hülse 12 bestehen jedoch aus einem eher weichen thermoplastischen elastomeren Kunststoff, im dargestellten Beispiel aus einem Polyurethan Elastomer (TPE-U). Die drei Teile 13, 14, 15 der Hülse 12 sind durch Formschluss und/oder Kraftschluss und/oder Stoffschluss miteinander verbunden. Diese Verbindung wird durch das Spritzgiessen im Mehrkomponenten-Spritzgiessverfahren erzeugt. Das zweite Teil 14 ist als zylinderförmige Manschette ausgebildet und ist in eine Vertiefung am Aussenmantel 33 der Kernhülse 13 eingefügt, bzw. eingespritzt. Am Aussenmantel 36 dieses zweiten Teils 14 sind mehrere radial nach aussen gerichtete, umlaufende und voneinander beabstandete Dichtungslippen 35 ausgebildet. Diese Dichtungslippen 35 stehen in Kontakt mit dem Innenmantel 11 des Kernhohlraumes 4 am Gehäuse 3 und bilden eine Labyrinthdichtung. Da das zweite Teil 14 aus einem weichen elastischen Kunststoff gebildet ist, passen sich diese Dichtungslippen 35 an den Innenmantel 11 an und bilden eine sehr gute Dichtung. Das dritte Teil 15 ist ebenfalls als zylinderförmige Manschette ausgebildet und ist entlang des Innenmantels 34 der Kernhülse 13 eingefügt, bzw. eingespritzt. Dieses dritte Teil 15 weist am Innenmantel 38 radial nach innen gerichtete, umlaufende und voneinander beabstandete Dichtungslippen 37 auf. Da auch dieses dritte Teil 15 und dessen Dichtungslippen 37 aus weichem, elastischem Material bestehen, können sich diese Dichtungslippen 37 sehr gut an den Aussenmantel 10 des Wellrohres 2 anpassen und gegenüber diesem Aussenmantel 10 ebenfalls eine Labyrinthdichtung bilden. Dadurch wird auch zwischen dem Ende 6 des Wellrohres 2 und der Hülse 12 eine sichere Abdichtung gewährleistet.

Die Kernhülse 13 weist am inneren Endbereich 20 eine nach innen gerichtete Schulter 21 auf, welche einen Anschlag für das Ende 6 des Wellrohres 2 bildet. Am gegenüberliegenden äusseren Endbereich 22 der Kernhülse 13 welcher in der Einbauposition der Hülse 12 im Gehäuse 3 gegen die Einstecköffnungs am Gehäuse 3 gerichtet ist sind entlang des Umfanges mehrere Längsschlitze 23 angeordnet. Diese Längsschlitze 23 erstrecken sich vom äusseren Ende der Kernhülse 13 bis etwa in den mittleren Bereich der Kernhülse 13. Durch diese Längsschlitze 23 werden Zungen 24, 25 gebildet, deren freie Enden in radialer Richtung elastisch beweglich sind. Auf mindestens einer dieser Zungen 24, 25 ist ein nach aussen gerichteter Sperrnocken 26, 27 mit einer Anschlagfläche 40 angeordnet. Im dargestellten Beispiel sind auf einer Zunge 25 zwei derartige Sperrnocken 26, 27 angeordnet, welche in Umfangsrichtung voneinander beabstandet sind. An dem gegen das äussere Ende 22 gerichteten Bereich der Sperrnocken 26, 27 befindet sich die Anschlagfläche 40. Mit Abstand zu dieser Anschlagfläche 40 ist am äusseren Endbereich 22 der Kernhülse 13 ein nach aussen gerichteter Ringkragen 31 angeordnet. In diesem Ringkragen 31 befindet sich eine Aussparung 32, welche im Bereiche des Zwischenraumes zwischen den beiden Sperrnocken 26 und 27 ausgebildet ist. Diese Aussparung 32 ermöglicht das Einstecken eines Hilfswerkzeuges zum Lösen der Verbindung zwischen der Hülse 12 und dem Gehäuse 3. Am äusseren Ende 22 der Kernhülse 13 befindet sich im Weiteren eine nach innen gerichtete Rippe 28, an welcher im dargestellten Beispiel durch die Längsschlitze 23 mehrere Krallen 29 ausgebildet werden. Diese Krallen 29 greifen bei eingestecktem Wellrohrende 6 am Aussenmantel 10 des Wellrohres 2 in ein Wellental 30 ein und verbinden das Wellrohr 2 mit der Hülse 12. Das dritte Teil 15 erstreckt sich dabei in die Längsschlitze 23 hinein und füllt diese aus. Dies ist besonders anschaulich in Fig. 3 erkennbar. Dadurch ist gewährleistet, dass auch diese Längsschlitze 23 gegen das Eindringen von Schmutz und Spritzwasser abgedichtet sind. Gleichzeitig gewährleistet das elastische Material des dritten Teils 15 aber auch die Beweglichkeit der Zungen 24, 25, so dass diese als Federelemente wirken können.

Etwa am mittleren Bereich des Aussenmantels 33 der Kernhülse 13 ist mindestens eine zusätzliche Aussenrippe 39 ausgebildet. Diese Aussenrippe 39 liegt in der Einbauposition der Kernhülse 12 im Kernhohlraum 4 des Gehäuses 3 am Innenmantel 11 des Kernhohlraumes 4 an. Sie stützt damit die Hülse 12 gegen Verkantungen und Durchbiegungen ab, wenn das Wellrohr 2 abgebogen oder abgeknickt wird. Im dargestellten Beispiel ist die Aussenrippe 39 als geschlossener Ring ausgebildet. Sie kann aber auch unterbrochen sein und Nocken bilden.

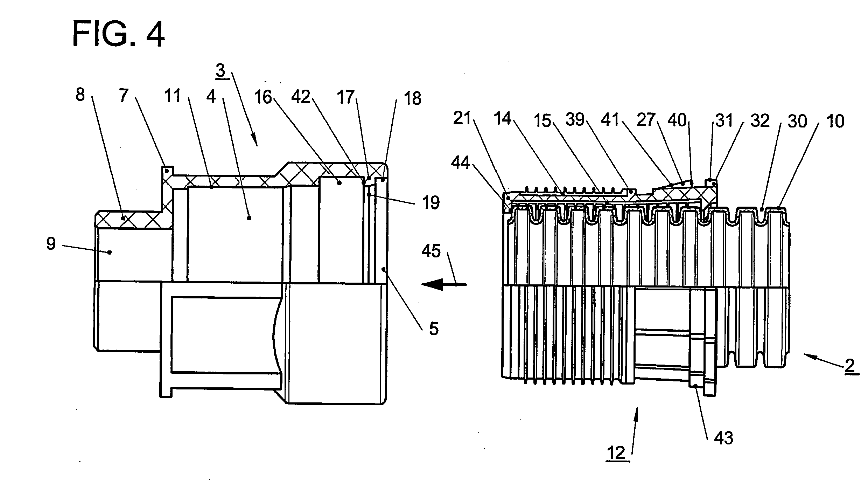

Zur Halterung der Hülse 12 im Gehäuse 3 sind am Innenmantel 11 des Kernhohlraumes 4 entsprechende Elemente ausgebildet. Diese sind in Fig. 1 und Fig. 4 dargestellt. Am Endbereich des Gehäuses 3 mit der Einstecköffnung 5 ist eine in Achsrichtung offene Ringnute 18 ausgebildet. Diese dient der Aufnahme des Ringkragens 31 an der Kernhülse 13. An die Ringnute 18 anschliessend ist eine ringförmige Rippe 17 ausgebildet, welche mit den Sperrnocken 26, 27 an der Hülse 12 zusammenwirken. Die nach innen gerichtete Ringfläche 19 dieser ringförmigen Rippe 17 ist als Konusfläche ausgebildet, welche gegen die Einstecköffnung 5 divergiert. Die Sperrnocken 26, 27 weisen schräge Gleitflächen 41 auf welche beim Zusammenschieben der Hülse 12 und des Gehäuses 3 mit dieser konischen Ringfläche 19 zusammenwirken. Beim Zusammenschieben werden die Sperrnocken 26, 27 und damit die elastische Zunge 25 durch die Rippe 17 nach innen verdrängt. Hinter der Rippe 17 ist am Gehäuse 3 eine weitere Ringnute 16 ausgebildet, welche der Aufnahme der Sperrnocken 26, 27 in der Einbauposition der Hülse 12 im Gehäuse 3 dient. Wenn die Hülse 12 vollständig in den Kernhohlraum 4 des Gehäuses 3 eingeschoben ist, federn die Sperrnocken 26, 27 hinter der Rippe 17 in ihre Ausgangsposition zurück und schnappen dadurch in eine Sperrposition ein. Die Anschlagflächen 40 liegen dann an der inneren Schulter 42 der ringförmigen Rippe 17 am Gehäuse 3 an. Wie aus Fig. 1 erkennbar ist, greifen in der Einbauposition der Hülse 12 im Gehäuse 3 einerseits die Sperrnocken 26, 27 in die Sperrpositionen hinter der ringförmigen Rippe 17 am Gehäuse 3 ein. Anderseits greifen die Krallen 29, welche an der Rippe 28 an der Hülse 12 ausgebildet sind, in ein Wellental 30 am Aussenmantel 10 des Wellrohres 2 ein. Der Aussenmantel 43 der Kernhülse 13 weist in diesem Bereich einen Durchmesser auf, welcher nur geringfügig kleiner ist als der innere Durchmesser der konischen Ringfläche 19 an der Rippe 17 des Gehäuses 3. Dadurch werden auch die Krallen 29 in der Sperrposition in einem Wellental 30 des Wellrohres 2 festgelegt und damit wird das eingesteckte Wellrohr 2 sicher im Gehäuse 3, bzw. in der Anschlussarmatur 1 gehalten. In der dargestellten Einbauposition sind die Kontaktflächen zwischen dem Aussenmantel 10 des Wellrohres 2 und der Hülse 12 durch das dritte Teil 15 der Hülse 12 vollständig und sicher abgedichtet. Die Kontaktflächen zwischen einem wesentlichen Teilbereich des Aussenmantels 33, der Hülse 12 und dem Innenmantel 11 des Kernhohlraumes 4 im Gehäuse 3 ist durch das zweite Teil 14 der Hülse 12 vollständig und sicher abgedichtet.

In Fig. 4 ist dargestellt, wie das Ende 6 eines Wellrohres 2 mit dem Gehäuse 3 zusammengebaut wird. Dabei wird zuerst die Hülse 12 vollständig auf das Ende 6 des Wellrohres 2 aufgeschoben bis die Endfläche 44 des Wellrohrendes 6 an der Schulter 21. der Hülse 12 anliegt. Wenn die Hülse 12 nicht vollständig auf das Wellrohrende 6 aufgeschoben wird, erfolgt das vollständige Aufschieben beim Einstecken in das Gehäuse 3, da dann die Sperrnocken 26, 27 an der Rippe 17 anstehen und dieser Widerstand erst nach vollständigem Aufschieben der Hülse 12 auf das Wellrohrende 6 überwunden werden kann. Dadurch wird gewährleistet, dass das Ende 6 des Wellrohres 2 immer vollständig in die Hülse 12 und damit in den Kernhohlraum 4 des Gehäuses 3 eingesteckt ist. Dies kann kontrolliert werden, da keine Sperrverbindung entsteht, solange die Teile nicht vollständig zusammengesteckt sind. Das Zusammenstecken des Wellrohres 2 mit der Hülse 12 und dem Gehäuse 3 erfolgt in Richtung des Pfeiles 45.

Mit dem erfindungsgemässen Anschlussstück 1, welches die erfindungemäss ausgebildete Hülse 12 und das Gehäuse 3 umfasst, muss das Wellrohr 2 vollständig in das Anschlussstück 1 eingesteckt werden, damit die Sperrverbindung entsteht. Dadurch wird sichergestellt, dass einerseits alle Dichtungselemente in der richtigen Position sind und anderseits die gewünschte Kraftübertragung und die entsprechende Sicherheit gegen das Ausreissen des Wellrohres 2 gewährleistet ist. Die Anordnung der Dichtelemente am zweiten Teil 14 und am dritten Teil 15 der Hülse 12 sowie das Zusammenwirken des Ringkragens 31 an der Hülse 12 mit der offenen Ringnute 18 am Gehäuse 3 führen zu einer praktisch vollständigen Dichtigkeit gegen das Eindringen von Schmutz und von Spritzwasser in das Innere des Anschlussstückes 1, bzw. des Wellrohres 2. Die erfindungsgemässe Lösung macht es möglich, dass am Mantel des Gehäuses 3 keine Durchbrüche angeordnet werden müssen und dass das Wellrohr 2 mit der Hülse 12 in beliebiger Umfangsposition in den Kernhohlraum 4 des Gehäuses 3 eingeschoben werden kann und damit auch in jeder Umfangsposition die Sperrwirkung entsteht. Dies erleichtert die Montage ganz erheblich.

## Patentansprüche

1. Verbindungs- und Anschlussstück (1) für Wellrohre (2) mit einem Gehäuse (3), welches einen Kernhohlraum (4) sowie eine Einstecköffnung (5) zur Aufnahme eines Endes (6) eines Wellrohres (2) aufweist, einem Verbindungsflansch (7) und einem Verbindungsstück (8) mit einer Durchlassöffnung (9) sowie einer in der Einbauposition des Wellrohres (2) zwischen dem Aussenmantel (10) des Endes (6) des Wellrohres (2) und dem Innenmantel (11) des Kernhohlraumes (4) des Gehäuses (3) angeordneten Hülse (12) mit elastischen Mantelsegmenten und nach innen und nach aussen gerichteten Sperrnocken, **dadurch gekennzeichnet, dass** die Hülse (12) ein mehrteiliges Kunststoff-Spritzgussteil ist, wobei die verschiedenen Teile fest miteinander verbunden sind und dabei ein erstes zylinderförmiges Teil der Hülse (12) eine Kernhülse (13) bildet, ein zweites zylinderförmiges Teil (14) mindestens einen Teilbereich des Aussenmantels (33) dieser Kernhülse (13) bedeckt und eine Dichtung zwischen der Kernhülse (13) und dem Gehäuse (3) bildet sowie ein drittes zylinderförmiges Teil (15) mindestens einen Teilbereich des Innenmantels (34) dieser Kernhülse (13) bedeckt und in der Einbauposition des Wellrohres (2) eine Dichtung zwischen der Kernhülse (13) und dem Wellrohr (2) bildet, dass das Gehäuse (3), am Ende mit der Einstecköffnung (5), am Mantel (11) des Kernhohlraumes (4) eine Ringnute (16) aufweist und zwischen dieser Ringnute (16) und der Einstecköffnung (5) eine nach innen gerichtete ringförmige Rippe (17) ausgebildet ist, dass am äusseren Endbereich (22) der Kernhülse (13), welcher in der Einbauposition des Hülse (12) im Gehäuse (3) gegen die Einstecköffnung (5) am Gehäuse (3) gerichtet ist, mehrere Längsschlitze (23) angeordnet sind und der Mantel der Kernhülse (13) durch diese Längsschlitze (23) in diese Endbereich (22) in mehrere, in radialer Richtung elastisch bewegliche die elastischen Mantelsegmente ausbildende Zungen (24, 25) aufgeteilt ist und an mindestens einer dieser Zungen (25) der Kernhülse (13) mindestens ein nach aussen gerichteter Sperrnocken (26, 27) mit einer Anschlagfläche (40) angeordnet ist und dass diese Sperrnocken (26, 27) mit der Ringnute (16) und der ringförmigen Rippe (17) am Gehäuse (3) zusammenwirken.

2. Verbindungs- und Anschlussstück für Wellrohre nach Patentanspruch 1, **dadurch gekennzeichnet, dass** die Hülse (12) und deren Einzelteile (13, 14, 15) als Mehrkomponenten-Spritzgussteil ausgebildet und zusammengefügt sind.

3. Verbindungs- und Anschlussstück für Wellrohre nach Patentanspruch 1 oder 2, **dadurch gekennzeichnet, dass** das zweite Teil (14) der Hülse (12) am Aussenmantel (36) mehrere radial nach aussen gerichtete, umlaufende und voneinander beabstandete Dichtungslippen (35) aufweist.

4. Verbindungs- und Anschlussstück für Wellrohre nach einem der Patentansprüche 1 bis 3, **dadurch gekennzeichnet, dass** das dritte Teil (15) der Hülse (12) am Innenmantel (38) radial nach innen gerichtete, umlaufende und voneinander beabstandete Dichtungslippen (37) aufweist.

5. Verbindungs- und Anschlussstück für Wellrohre nach einem der Patentansprüche 1 bis 4, **dadurch gekennzeichnet, dass** der Mantel des Gehäuses (3) geschlossen ist und keine radialen Durchbrüche aufweist.

6. Verbindungs- und Anschlussstück für Wellrohre nach einem der Patentansprüche 1 bis 5, **dadurch gekennzeichnet, dass** die Kernhülse (13) an einem inneren Endbereich (20) eine nach innen gerichtete Schulter (21) als Anschlag für das Wellrohrende (6) aufweist.

7. Verbindungs- und Anschlussstück für Wellrohre nach einem der Patentansprüche 1 bis 6, **dadurch gekennzeichnet, dass** am äusseren Endbereich (22) der Kernhülse (13) eine nach innen gerichtete einer Sperrnocken ausbildende Rippe (28) eine oder mehrere Krallen (29) bildet, welche in der Einbauposition des Wellrohres (2) in ein Wellental (30) am Aussenmantel (10) des Wellrohres (2) eingreifen.

8. Verbindungs- und Anschlussstück für Wellrohre nach einem der Patentansprüche 1 bis 7, **dadurch gekennzeichnet, dass** am äusseren Ende (22) der Kernhülse (13) ein nach aussen gerichteter Ringkragen (31) angeordnet ist, welcher in der Einbauposition des Hülse (12) im Gehäuse (3) mit einer in Achsrichtung offenen Ringnute (18) an der Einstecköffnung (5) des Gehäuses (3) zusammenwirkt.

9. Verbindungs- und Anschlussstück für Wellrohre nach einem der Patentansprüche 1 bis 8, **dadurch gekennzeichnet, dass** am mittleren Bereich des Aussenmantels (33) der Kernhülse (13) mindestens eine zusätzliche Aussenrippe (39) angeordnet ist, welche in der Einbauposition der Hülse (12) im Gehäuse (3) am Innenmantel (11) des Kernhohlraumes (4) des Gehäuses (3) anliegt.

10. Verbindungs- und Anschlussstück für Wellrohre nach einem der Patentansprüche 1 bis 9, **dadurch gekennzeichnet, dass** das Gehäuse (3) und das erste Teil der Hülse (12), welches die Kernhülse (13) bildet, aus einem harten thermoplastischen Kunststoff gebildet sind und dieser Kunststoff ein Kunststoff aus der Gruppe der Polyamide (PA) oder der Polypropylene (PP) ist.

11. Verbindungs- und Anschlussstück für Wellrohre nach einem der Patentansprüche 1 bis 10, **dadurch gekennzeichnet, dass** das zweite (14) und das dritte Teil (15) der Hülse (12) aus einem thermoplastischen elastomeren Kunststoff gebildet ist und dies ein Kunststoff aus der Gruppe der Polyurethan Elastomere (TPE-U) oder der Olefin Elastomere (TPE-O) oder der Amid Elastomere (TPE-A) oder ein vernetztes thermoplastisches Elastomer (TPE-X) ist.

12. Verbindungs- und Anschlussstück für Wellrohre nach einem der Patentansprüche 1 bis 11, **dadurch gekennzeichnet, dass** die verschiedenen Einzelteile (13, 14, 15) der Hülse (12) an den gegenseitigen Kontaktflächen formschlüssig und kraftschlüssig miteinander verbunden sind.

13. Verbindungs- und Anschlussstück für Wellrohre nach einem der Patentansprüche 1 bis 11, **dadurch gekennzeichnet, dass** die verschiedenen Einzelteile (13, 14, 15) der Hülse (12) an den gegenseitigen Kontaktflächen stoffschlüssig miteinander verbunden sind.

14. Verbindungs- und Anschlussstück für Wellrohre nach einem der Patentansprüche 1 bis 11, **dadurch gekennzeichnet, dass** die verschiedenen Einzelteile (13, 14, 15) der Hülse (12) an den gegenseitigen Kontaktflächen durch eine Kombination von Formschluss, Kraftschluss und Stoffschluss miteinander verbunden sind.

15. Verbindungs- und Anschlussstück für Wellrohre nach einem der Patentansprüche 1 bis 14, **dadurch gekennzeichnet, dass** die nach innen gerichtete Ringfläche (19) der ringförmigen Rippe (17) am Gehäuse (3) als Konusfläche ausgebildet ist.

16. Verbindungs- und Anschlussstück für Wellrohre nach einem der Patentansprüche 1 bis 15, **dadurch gekennzeichnet, dass** das dritte Teil (15) der Hülse (12) einstückig in die Längsschlitze (23) der Kernhülse (13) eingreift und diese Längsschlitze (23) mindestens teilweise ausfüllt.

17. Verbindungs- und Anschlussstück für Wellrohre nach Patentanspruch 8, **dadurch gekennzeichnet, dass** der Ringkragen (31) an der Kernhülse (13) eine Aussparung (32) aufweist und im Bereiche dieser Aussparung (32) an mindestens einer der elastisch beweglichen Zungen (25) der Kernhülse (13) mindestens ein nach aussen gerichteter Sperrnocken (26, 27) angeordnet ist.

## Claims

1. Connecting and coupling piece (1) for corrugated tubes (2) with a housing (3) comprising a hollow core volume (4) as well as an entry opening (5) for receiving one end (6) of a corrugated tube (2), a connecting flange (7) and a connecting piece (8) with a pass-through opening (9) as well as a sleeve (12) located in the installation position of the corrugated tube (2) between the outer shell (10) of the end (6) of the corrugated tube (2) and the inner shell (11) of the hollow core volume (4) of the housing (3), the sleeve comprising elastic shell segments and inwardly and outwardly directed blocking lobes, **characterized in that** the sleeve (12) is a multipart synthetic material injection molded part, wherein the various parts are fixedly connected with each other, a first cylindrical part of the sleeve (12) forming a core sleeve (13), a second cylindrical part (14) covering at least one sub-region of the outer shell (33) of this core sleeve (13) and forming a seal between the core sleeve (13) and the housing (3), and a third cylindrical part (15) covering at least a sub-region of the inner shell (34) of this core sleeve (13) and forming, in the installation position of the corrugated tube (2), a seal between the core sleeve (13) and the corrugated tube (2) that the housing (3) comprises an annular groove (16) on the shell (11) of the hollow core volume (4) at the end with the entry opening (5), and an inwardly directed annular rib (17) is formed between this annular groove (16) and the entry opening (5), that several longitudinal slots (23) are arranged on the outer end region (22) of the core sleeve (13) facing, in the installation position of the sleeve (12) in the housing (3), the entry opening (5) and by these longitudinal slots (23) the shell of the core sleeve (13) in this end region (22) is divided into several tongues (24, 25) elastically movable in the radial direction and forming the elastic shell segments, and on at least one of these tongues (25) of the core sleeve (13) at least one outwardly facing blocking lobe (26, 27) is arranged with a stop face (40), and that these blocking lobes (26, 27) interact with the annular groove (16) and the annular rib (17) on the housing (3).

2. Connecting and coupling piece for corrugated tubes according to claim 1, **characterized in that** the sleeve (12) and its individual parts (13, 14, 15) are designed and joined as a multi-component injection moulded part.

3. Connecting and coupling piece for corrugated tubes according to claim 1 or 2, **characterized in that** the second part (14) of the sleeve (12) comprises several sealing lips (35) spaced apart from each other, facing in radial direction outward and encircling the outer shell (36).

4. Connecting and coupling piece for corrugated tubes according to any one of the claims 1 to 3, **characterized in that** the third part (15) of the sleeve (12) comprises several in radial direction inward-facing sealing lips (37), spaced apart from each other and encircling the inner shell (38).

5. Connecting and coupling piece for corrugated tubes according to any one of the claims 1 to 4, **characterized in that** the shell of the housing (3) is closed and does not comprise any radial apertures.

6. Connecting and coupling piece for corrugated tubes according to any one of the claims 1 to 5, **characterized in that** the core sleeve (13) comprises an inward-facing shoulder (21) at an inner end region (20) as a stop for the corrugated tube end (6).

7. Connecting and coupling piece for corrugated tubes according to any one of the claims I to 6, **characterized in that** at the outer end region (22) of the core sleeve (13) an inward-facing rib (28) acting as a blocking lobe forms one or several claws (29), which engage in a wave trough (30) of the outer shell (10) of the corrugated tube (2) in its installation position.

8. Connecting and coupling piece for corrugated tubes according to any one of the claims 1 to 7, **characterized in that** an outward-facing annular collar (31) is arranged at the outer end (22) of the core sleeve (13), which collar, in the installation position of the sleeve (12) in the housing (3), cooperates with an annular groove (18) open in the axial direction and situated at the entry opening (5) of the housing (3).

9. Connecting and coupling piece for corrugated tubes according to any one of the claims 1 to 8, **characterized in that** in the central region of the outer shell (33) of the core sleeve (13) at least one additional outer rib (39) is arranged, which, in the installation position of the sleeve (12) in the housing (3), is in contact with the inner shell (11) of the hollow core volume (4) of the housing (3).

10. Connecting and coupling piece for corrugated tubes according to any one of the claims 1 to 9, **characterized in that** the housing (3) and the first part of the sleeve (12) forming the core sleeve (13), are made of a hard thermoplastic synthetic material and this synthetic material is a synthetic material of the group of polyamides (PA) or polypropylenes (PP).

11. Connecting and coupling piece for corrugated tubes according to any one of the claims 1 to 10, **characterized in that** the second (14) and the third part (15) of the sleeve (12) are made of a thermoplastic elastomeric synthetic material and that this is a synthetic material of the group of polyurethane elastomers (TPE-U) or of olefin elastomers (TPE-O) or of amide elastomers (TPE-A) or a crosslinked thermoplastic elastomer (TPE-X).

12. Connecting and coupling piece for corrugated tubes according to any one of the claims 1 to 11, **characterized in that** the various individual parts (13, 14, 15) of the sleeve (12) are joined in a form-fit and force-fit manner at the mutual contact faces.

13. Connecting and coupling piece for corrugated tubes according to any one of the claims 1 to 11, **characterized in that** the various individual parts (13, 14, 15) of the sleeve (12) are joined at the mutual contact faces by material engagement.

14. Connecting and coupling piece for corrugated tubes according to any one of the claims 1 to 11, **characterized in that** the various individual parts (13, 14, 15) of the sleeve (12) are joined at the mutual contact faces by a combination of form-fit, force-fit and material engagement.

15. Connecting and coupling piece for corrugated tubes according to any one of the claims 1 to 14, **characterized in that** the inward-facing annular surface (19) of the annular rib (17) on the housing (3) is formed as a conical face.

16. Connecting and coupling piece for corrugated tubes according to any one of the claims 1 to 15, **characterized in that** the third part (15) of the sleeve (12) engages as one piece in the longitudinal slots (23) of the core sleeve (12) and at least partially fills out these longitudinal slots (23).

17. Connecting and coupling piece for corrugated tubes as claimed in patent claim 8, **characterized in that** the annular collar (31) on the core sleeve (13) comprises a recess (32), and in the region of this recess (32) at least one outward-facing blocking lobe (26, 27) is arranged on at least one of the elastically movable tongues (25) of the core sleeve (13).

## Revendications

1. Pièce de liaison et de raccordement (1) pour tubes ondulés (2), qui présente
un boîtier (3) doté d'une cavité d'âme (4) ainsi que d'une ouverture d'enfichage (5) qui reprend une extrémité (6) d'un tube ondulé (2),
une bride de raccordement (7) et une pièce de raccordement (8) traversée par une ouverture (9) et
une douille (12) dotée de segments élastiques d'enveloppe et de cames de blocage orientées vers l'intérieur et vers l'extérieur, disposées entre l'enveloppe extérieure (10) de l'extrémité (6) du tube ondulé (2) et l'enveloppe intérieure (11) de la cavité d'âme (4) du boîtier (3) lorsque le tube ondulé (2) est en position de montage,
**caractérisée en ce que**
la douille (12) est une pièce en matière synthétique moulée par injection en plusieurs parties, les différentes parties étant solidarisées les unes des autres et parmi elles, une première partie cylindrique de la douille (12) forme une douille d'âme (13), une deuxième partie cylindrique (14) couvre au moins une partie de l'enveloppe extérieure (33) de cette douille d'âme (13) et forme une étanchéité entre la douille d'âme (13) et le boîtier (3) et une troisième partie cylindrique (15) recouvre au moins une partie de l'enveloppe intérieure (34) de cette douille d'âme (13) et forme une étanchéité entre la douille d'âme (13) et le tube ondulé (2) lorsque le tube ondulé (2) est en position de montage,
**en ce qu'**à l'extrémité qui présente l'ouverture d'enfichage (5), le boîtier (3) présente sur l'enveloppe (11) de la cavité d'âme (4) une rainure annulaire (16), une nervure annulaire (17) orientée vers l'intérieur étant formée entre cette rainure annulaire (16) et l'ouverture d'enfichage (5),
**en ce que** lorsque la douille (12) est en position de montage dans le boîtier (3), plusieurs fentes longitudinales (23) sont disposées sur la partie d'extrémité extérieure (22) de la douille d'âme (13) orientée vers l'ouverture d'enfichage (5) ménagée sur le boîtier (3),
**en ce que** dans cette partie d'extrémité (22), l'enveloppe de la douille d'âme (13) est divisée par ces fentes longitudinales (23) en plusieurs languettes (24, 25) qui forment les segments élastiques d'enveloppe et qui sont mobiles élastiquement dans la direction radiale,
**en ce qu'**au moins une came de blocage (26, 27) orientée vers l'extérieur et dotée d'une surface de butée (40) est disposée sur au moins l'une de ces pattes (25), de la douille d'âme (13) et
**en ce que** ces cames de blocage (26, 27) coopèrent avec la rainure annulaire (16) et la nervure annulaire (17) prévue sur le boîtier (3).

2. Pièce de liaison et de raccordement pour tubes ondulés selon la revendication 1, **caractérisée en ce que** la douille (12) et ses différentes parties (13, 14, 15) sont configurées comme pièces moulées par injection en plusieurs composants et sont assemblées.

3. Pièce de liaison et de raccordement pour tubes ondulés selon les revendications 1 ou 2, **caractérisée en ce que** la deuxième partie (14) de la douille (12) présente sur l'enveloppe extérieure (36) plusieurs lèvres périphériques d'étanchéité (35) orientées radialement vers l'extérieur et situées à distance mutuelle.

4. Pièce de liaison et de raccordement pour tubes ondulés selon l'une des revendications 1 à 3,
**caractérisée en ce que** sur l'enveloppe intérieure (38), la troisième partie (15) de la douille (12) présente des lèvres périphériques d'étanchéité (37) orientées radialement vers l'intérieur et disposées à distance mutuelle.

5. Pièce de liaison et de raccordement pour tubes ondulés selon l'une des revendications 1 à 4,
**caractérisée en ce que** l'enveloppe du boîtier (3) est fermée et ne présente pas de perforations radiales.

6. Pièce de liaison et de raccordement pour tubes ondulés selon l'une des revendications 1 à 5,
**caractérisée en ce que** sur sa partie d'extrémité intérieure (20), la douille d'âme (13) présente un épaulement (21) orienté vers l'intérieur et qui sert de butée pour l'extrémité (6) du tube ondulé.

7. Pièce de liaison et de raccordement pour tubes ondulés selon l'une des revendications 1 à 6,
**caractérisée en ce que** sur la partie d'extrémité extérieure (22) de la douille d'âme (13), une nervure (28) qui forme une came de blocage et qui est orientée vers l'intérieur forme une ou plusieurs griffes (29) qui, lorsque le tube ondulé (2) est en position de montage, s'engagent dans un creux d'ondulation (30) de l'enveloppe extérieure (10) du tube ondulé (2).

8. Pièce de liaison et de raccordement pour tubes ondulés selon l'une des revendications 1 à 7,
**caractérisée en ce qu'**un collet annulaire (31) orienté vers l'extérieur et qui, lorsque la douille (12) est en position de montage dans le boîtier (3), coopère avec une rainure annulaire (18) ouverte dans la direction axiale et prévue sur l'ouverture d'enfichage (5) du boîtier (3) est disposé à l'extrémité extérieure (22) de la douille d'âme (13).

9. Pièce de liaison et de raccordement pour tubes ondulés selon l'une des revendications 1 à 8,
**caractérisée en ce qu'**au moins une nervure extérieure supplémentaire (39) qui, lorsque la douille (12) est en position de montage dans le boîtier (3), repose sur l'enveloppe intérieure (11) de la cavité d'âme (4) du boîtier (3), est prévue sur la partie centrale de l'enveloppe extérieure (33) de la douille d'âme (13).

10. Pièce de liaison et de raccordement pour tubes ondulés selon l'une des revendications 1 à 9,
**caractérisée en ce que** le boîtier (3) et la première partie de la douille (12) qui forme la douille d'âme (13) sont formés d'une matière synthétique thermoplastique dure et **en ce que** cette manière synthétique est une matière synthétique de l'ensemble constitué des polyamides (PA) et des polypropylènes (PP).

11. Pièce de liaison et de raccordement pour tubes ondulés selon l'une des revendications 1 à 10,
**caractérisée en ce que** la deuxième partie (14) et la troisième partie (15) de la douille (12) sont formées d'une matière synthétique élastomère thermoplastique et **en ce que** cette matière synthétique est une matière synthétique de l'ensemble constitué des élastomères à base de polyuréthane (TPE-U), des élastomères à base d'oléfine (TPE-O), des élastomères à base d'amide (TPE-A) ou d'un élastomère thermoplastique réticulé (TPE-X).

12. Pièce de liaison et de raccordement pour tubes ondulés selon l'une des revendications 1 à 11,
**caractérisée en ce que** les différentes parties (13, 14, 15) de la douille (12) sont reliées mutuellement en correspondance géométrique et en correspondance mécanique sur leurs surfaces mutuellement en contact.

13. Pièce de liaison et de raccordement pour tubes ondulés selon l'une des revendications 1 à 11,
**caractérisée en ce que** les différentes parties (13, 14, 15) de la douille (12) sont reliées l'une à l'autre en correspondance de matière sur leurs surfaces mutuellement en contact.

14. Pièce de liaison et de raccordement pour tubes ondulés selon l'une des revendications 1 à 11,
**caractérisée en ce que** les différentes parties (13, 14, 15) de la douille (12) sont reliées les unes aux autres par une combinaison de correspondance géométrique, de correspondance mécanique et de correspondance de matière sur leurs surfaces mutuellement en contact.

15. Pièce de liaison et de raccordement pour tubes ondulés selon l'une des revendications 1 à 14,
**caractérisée en ce que** la surface annulaire (19) orientée vers l'intérieur de la nervure annulaire (17) du boîtier (3) est configurée comme surface conique.

16. Pièce de liaison et de raccordement pour tubes ondulés selon l'une des revendications 1 à 15,
**caractérisée en ce que** la troisième partie (15) de la douille (12) s'engage d'un seul tenant dans la fente longitudinale (23) de la douille d'âme (13) et remplit au moins une partie de cette fente longitudinale (23).

17. Pièce de liaison et de raccordement pour tubes ondulés selon la revendication 8, **caractérisée en ce que** le collet annulaire (31) prévu sur la douille d'âme (13) présente une découpe (32) et **en ce que** dans la zone formée par cette découpe (32), au moins une came de blocage (26, 27) orientée vers l'extérieur est disposée sur au moins l'une des languettes (25) élastiquement mobile de la douille d'âme (13).
